# EUROPÄISCHE PATENTSCHRIFT

(11) **EP 3 456 443 B1**
(45) Veröffentlichungstag und Bekanntmachung des Hinweises auf die Patenterteilung: **25.03.2020**
(21) Anmeldenummer: 17191474.0
(22) Anmeldetag: 15.09.2017
(51) Int. Cl.: B23B 13/02, B21D 43/00, B23B 13/10, B23Q 7/10

(54) **WERKSTOFFSTANGEN-ZUFÜHRVORRICHTUNG**
MATERIAL BAR SUPPLY DEVICE
DISPOSITIF D'ALIMENTATION EN MATÉRIAU EN BARRES

(43) Veröffentlichungstag der Anmeldung: 20.03.2019
(73) Patentinhaber: FMB Maschinenbaugesellschaft mbH & CO. KG, 97906 Faulbach (DE)
(72) Erfinder: Schwab, Steffen, 97901 Altenbuch (DE); Schwab, Andreas, 63820 Elsenfeld (DE); Löffler, Kai, 63906 Erlenbach am Main (DE)
(74) Vertreter: Blumbach · Zinngrebe Patentanwälte PartG mbB

(56) Entgegenhaltungen:
- EP-A1- 1 990 129
- EP-A1- 2 364 801
- JP-A- 2007 276 102

## Beschreibung

Die vorliegende Erfindung betrifft eine Werkstoffstangen-Zuführvorrichtung zum Zuführen von Werkstoffstangen zu einer Werkzeugmaschine, mit einem Magazin zur Bevorratung der Werkstoffstangen und mit einer Führungseinrichtung, in welche jeweils eine zu bearbeitende Werkstoffstange aus dem Magazin zuführbar ist, wobei die Richtung der Zuführung einer Werkstoffstange aus dem Magazin in die Führungseinrichtung quer zur Längsachse der Werkstoffstange in der Führungseinrichtung ist, sowie ein Verfahren zum Zuführen von Werkstoffstangen zu einer Werkzeugmaschine. Eine solche gattungsbildende Vorrichtung der eingangs genannten Art ist z.B. aus der EP 0 212 077 A2, aus der EP 2 316 611 B1 und auch aus der EP 1990 129 A1, die eine Werkstoffstangen-Zuführvorrichtung nach dem Oberbegriff des Anspruchs 1 offenbart, bekannt.

Entsprechend den Ausführungen der EP 2 316 611 B1, geht es bei diesen Vorrichtungen darum, Werkstoffstangen einer Werkzeugmaschine, d.h. z.B. einer Drehmaschine, nacheinander zuzuführen.

In dieser Werkzeugmaschine werden diese Werkstoffstangen dann bearbeitet und dabei einzelne bestimmte Bauteile aus diesen Werkstoffstangen gefertigt.

Dazu sind die Werkstoffstangen gesammelt in einem Magazin vorhanden, aus dem sie in eine Führung zugeführt werden. Diese Führung sorgt dann für die korrekte Ausrichtung der Werkstoffstange im Hinblick auf ihre Längsachse bezüglich der Werkzeugmaschine. Hierzu bedarf es einer Anpassung in einer Richtung quer und in der Regel auch senkrecht zu der Zuführrichtung der Werkstoffstange aus dem Magazin in die Führung. Eine exakte Ausrichtung ist hierbei sehr wichtig, da die Werkstoffstangen in der Werkzeugmaschine oftmals in schnelle Rotation versetzt werden. Liegt die Rotationsachse nicht exakt auf der zentralen Mittellängsachse der Werkstoffstange, führt dies zu Unwucht und in der Folge zu erheblichen Schäden.

Mit dem Begriff "Zuführrichtung" ist demgemäß die Richtung gemeint, in der die Werkstoffstangen aus dem Magazin in die Führung gelangen, wobei die Zuführrichtung meist quer zur Längsachse der Werkstoffstange verläuft. In Abhängigkeit von dem gewünschten Produkt werden ferner Werkstoffstangen mit beispielsweise unterschiedlichem Durchmesser verwendet. Für eine verlässliche Ausrichtung der zentralen Mittellängsachse der Werkstoffstange in Bezug auf die Werkzeugmaschine ist in der EP 0 212 077 A2 daher eine Führung vorgesehen, die es aufgrund einer Ausgestaltung als Trommel mit unterschiedlich großen Halterungen erlaubt, Werkstoffstangen unterschiedlichen kreisförmigen Querschnitts aufzunehmen.

Weiter ergibt sich aus der EP 2 316 611 B1, dass daneben im Stand der Technik auch Vorrichtungen bekannt sind, die Werkstoffstangen in einer Führung mit einem V-förmigen Querschnittsprofil aufnehmen können und somit zumindest eine Ausrichtung entlang der Zuführrichtung der Werkstoffstangen erreichen, sofern diese ein kreisrundes Querschnittsprofil haben. Bei anderen Querschnittsgeometrien sind asymmetrische, insbesondere verkippte Lagen in dem V-förmigen Ausschnitt der Führung möglich. Bei der Verwendung solcher Maschinen hat sich jedoch gezeigt, dass durch die bekannten Führungen solcher Vorrichtungen nur bedingt eine optimale Ausrichtung von Werkstoffstangen mit beliebigen, insbesondere nicht runden, Querschnittsprofilen möglich ist.

So stellen z.B. Werkstoffstangen mit vier- oder sechseckigen Querschnittsprofilen, die neben den kreisrunden Profilen ebenfalls häufig verwendet werden, häufig dahingehend Probleme dar, dass z.B. Vorrichtungen der EP 0 212 077 A2 nicht geeignet sind, an diese nicht kreisrunden Querschnittsprofile angepasst zu werden. Eine korrekte Ausrichtung der Werkstoffstangen mit ihrer zentralen Mittellängsachse in Bezug auf die Werkzeugmaschine, ist somit schwer oder gar nicht möglich.

In der EP 2 316 611 B1 ist dann eine Ausführung beschrieben, bei der eine Werkstoffstange mit im Wesentlichen jeglicher Querschnittsform zwischen jeweils zwei auf einer drehbaren Scheibe angeordneten Begrenzern zum Liegen kommen kann und durch die Verdrehbewegung mehrerer in Reihe angeordneter Scheiben mit solchen zwei Begrenzern längs einer durch die Vielzahl der jeweils zwei Begrenzer definierten Mittelachse ausrichtbar ist.

Insbesondere für die Zuführung von asymmetrischen Profilformen bei der die Lage der Schwerpunktsachse bzw. die Rotationsachse flexibel und frei auf die Mittelachse der rotierenden Spindel der Werkzeugmaschine ausgerichtet werden muss, sind jedoch die bisher bekannten Lösungen nicht oder nur mit individuell an die jeweiligen Profilform angepassten Bauteilen geeignet. Bei der Ausführung nach EP 2 316 611 B1 ist darüber hinaus stets eine synchrone Rotationsbewegung der Scheiben notwendig, da es andernfalls, aufgrund einer Anlage von zwei auf einer drehbaren Scheibe angeordneten Begrenzern an zwei Außenstellen der Werkstoffstange zu einem Verkanten der Werkstoffstange innerhalb der Führung und in Folge zu einer Blockade des gesamten Verdrehmechanismus und/oder Fehlausausrichtung der Werkstoffstange kommen kann.

Der vorliegenden Erfindung liegt daher die Aufgabe zugrunde, eine Führung für eine solche, eingangs benannte gattungsbildende Vorrichtung bereitzustellen, die es gestattet, Werkstoffstangen mit von der Kreisgeometrie abweichenden Querschnittsprofilen in ein und derselben Vorrichtung verwenden und zu einer Werkzeugmaschine exakt in einer beliebig wählbaren Mittenposition ausgerichtet zuführen zu können.

Auch in Bezug auf vorliegende Erfindung sei darauf hingewiesen, dass mit dem Begriff "Zuführrichtung", sofern nichts anderes besagt wird, nachfolgend somit stets die Richtung gemeint ist, in der die Werkstoffstangen aus dem Magazin in die Führung gelangen und diese Richtung meist quer zur Längsachse der Werkstoffstange verläuft.

Erfindungsgemäß wird diese Aufgabe dadurch gelöst, dass die Führungseinrichtung zur Bereitstellung einer variabel veränderbaren Aufnahmerinne für die Werkstoffstange einen Auflageschenkel und einen Anlageschenkel besitzt, wobei der Auflageschenkel eine in Richtung der Zuführung und gegenüber der Horizontalen geneigte Auflage der Aufnahmerinne bereitstellt und der Anlageschenkel entlang der Neigung relativ zum Auflageschenkel verfahrbar ist, so dass zwischen den beiden Schenkeln die variabel veränderbare Aufnahmerinne ausbildbar ist, in welche die zu bearbeitende Werkstoffstange auf die Auflage zuführbar ist, und wobei der Auflageschenkel zusammen mit dem Anlageschenkel als Ganzes vertikal verfahrbar ist.

Aufgrund der durch die beiden Schenkel ausbildbaren, geneigten und in wenigstens zwei Achsen verstellbare Aufnahmerinne, gestattet die erfindungsgemäße Vorrichtung folglich eine Anpassung der Führungseinrichtung an individuelle Breiten und auch Formen des Querschnitts, insbesondere auch an nicht runde Formen des Querschnitts, der Werkstoffstangen. Ferner ermöglicht die Veränderbarkeit der Schenkel der Aufnahmerinne auf einfachste Weise, dass die Werkstoffstange bei im Wesentlichen jeglicher Querschnittsform stets korrekt und exakt innerhalb der Führungseinrichtung jeweils längs einer Mittellängslinie der Führungseinrichtung in beliebiger Stellung ausrichtbar sind.

Stellt ferner der geneigte Auflageschenkel ein in Richtung der Zuführung und gegenüber der Horizontalen verlaufendes Gefälle bereit, kann gemäß einer Ausführung eine Werkstoffstange bereits allein mittels des verfahrbaren Anlageschenkels über die Schwerkraft von dem Magazin der Führungseinrichtung zugeführt werden. Die Werkstoffstange kann folglich auch ohne zusätzlichen Mechanismus aus dem Magazin der Führungseinrichtung übergeben werden. Der verfahrbare Anlageschenkel bietet hierbei überdies den Vorteil, dass ein Überspringen oder Überrollen der Werkstoffstange über die Führungseinrichtung hinweg vermieden wird, da mittels des verfahrbaren Anlageschenkels auch die Geschwindigkeit der Werkstoffstangen- bzw. Materialstangenbewegung kontrollierbar ist.

Eine weitere bevorzugte Ausführung sieht ferner eine individuelle Verfahrbarkeit eines oder beider Schenkel der durch diese gebildeten Aufnahmerinne jeweils auch in einem Abstand quer zur Zuführrichtung vor. Dies bewirkt nochmals eine zusätzliche Steigerung der Zuverlässigkeit und Einfachheit, die Werkstoffstange bei im Wesentlichen jeglicher Querschnittsform stets korrekt und exakt innerhalb der Führungseinrichtung bezüglich der Werkzeugmaschine auszurichten. In praktischer Umsetzung sind hierfür zweckmäßig jeweils wenigstens zwei, quer zur Richtung der Zuführung voneinander beabstandete Antriebe zur relativen Verfahrbarkeit des einen Anlageschenkels und/oder wenigstens zwei, quer zur Richtung der Zuführung voneinander beabstandete Antriebe zur vertikalen Verfahrbarkeit vorgesehen.

In einer weiteren Ausgestaltung der Erfindung ist der eine Auflageschenkel und/oder der eine Anlageschenkel durch eine Mehrzahl von jeweils segmentartig und quer zur Zuführrichtung voneinander beabstandet angeordneten Schenkelelementen gebildet.

Dies hat den Vorteil das es in diesem Fall das konstruktive Minimum für die Auflagen darstellt, um eine verlässliche Ausrichtung der Werkstoffstange zu erreichen, insbesondere, wenn zweckmäßig jedem segmentartig ausgebildeten Schenkel ein Antrieb zu dessen Verfahrbarkeit zugeordnet ist.

In einer weiteren Ausgestaltung der Erfindung ist der Auflageschenkel und/oder Anlageschenkel als durchgehender Schenkel entlang der gesamten Aufnahmerinne ausgeführt. Im Gegensatz zu einer z.B. aus der EP 2 316 611 B1 bekannten Vorrichtung, ist die erfindungsgemäße Lösung folglich nicht auf eine segmentweise Ausgestaltung einer Führung der Werkstoffstange beschränkt, welches ferner den Vorteil hat, dass auch kurze Stangenabschnitte zuverlässig der Werkzeugmaschine zugeführt werden können.

In einer weiteren Ausgestaltung der Erfindung ist zur Verfahrbarkeit der Schenkel wenigstens ein elektromechanischer Antrieb bzw. eine elektromechanische Verstellung vorgesehen.

Ein elektromechanischer Antrieb bzw. eine elektromechanische Verstellung bietet den Vorteil, dass ein hierdurch bewegter Schenkel auf einfachste Weise in beliebiger Position jeweils längs einer Mittelachse positionierbar ist.

In einer weiteren Ausgestaltung der Erfindung ist zur Verfahrbarkeit der Schenkel wenigstens ein pneumatischer Stellantrieb und wenigstens ein einstellbarer Anschlag vorgesehen. Ein durch einen Stellantrieb bewegter Schenkel kann zur Positionierung in veränderbarer, gewünschter Endstellung somit gegen einen Anschlag fahren, um eine verlässliche Ausrichtung der Werkstoffstange zu erreichen.

Bei der Verstellung über einen pneumatischen Stellantriebe mit Anschlag liegt ein wesentlicher Vorteil darin, dass es sich um eine kostengünstige Alternative zur elektromechanischen Verstellung handelt.

In einer weiteren Ausgestaltung der Erfindung ist auch eine Neigung des Anlageschenkels in Richtung der Zuführung und gegenüber der Vertikalen einstellbar und/oder zumindest der Auflageschenkel in dessen Neigung veränderbar. Die Ausgestaltungen bieten den Vorteil, dass hierüber auch der Winkel zwischen den Schenkeln, zwischen welchen die Aufnahmerinne gebildet wird, einstellbar ist und die Aufnahmerinne folglich nochmals effektiver auf das durch die Geometrie und Oberflächenbeschaffenheit bestimmte Gleitverhalten der zu bearbeitenden Werkstoffstangen anpassen kann.

In einer weiteren Ausgestaltung der Erfindung ist vorgesehen, die von dem Magazin kommenden Werkstoffstangen durch eine Separiervorrichtung zunächst zu separieren und zweckmäßig anschließend direkt der Aufnahmerinne zuzuführen.

Die Ausgestaltung hat den Vorteil, dass die Werkstoffstangen vereinzelt auf die Führung befördert werden können, sodass ein Verfahren und die damit verbundene Ausrichtung des Anlageschenkels weniger häufig, und insbesondere nicht bei jedem Zuführzyklus stattfinden muss, was die Nebenzeiten verkürzt.

In einer weiteren Ausgestaltung der Erfindung kann mit den Schenkeln ein Hubgerüst verbunden sein. Folglich können die verfahrbaren Schenkel auch dazu benutzt werden, die auf dem Magazin bevorrateten Werkstoffstangen mit Hilfe eines solchen Hubgerüst in die Aufnahmerinne hinauszuheben.

Diese Ausgestaltung hat insbesondere den Vorteil, dass das Zuführen der Werkstoffstangen in im wesentlichen beliebiger Lage und das anschließende Ausrichten der Werkstoffstange in Bezug auf die Werkzeugmaschine unabhängig von der Schwerkraft erfolgen kann.

Ein weiterer Aspekt der vorliegenden Erfindung ist ein bevorzugtes Verfahren zum Zuführen von Werkstoffstangen zu einer Werkzeugmaschine entsprechend den vorhergehenden Ausführungen, mit folgenden Schritten:
Aussondern einer Werkstoffstange aus einem Magazin auf einen geneigten Auflageschenkel, insbesondere mittels Schwerkraft, bei Verfahren eines Anlageschenkels entlang der Neigung relativ zum Auflageschenkel, so dass zwischen den beiden Schenkeln eine variabel veränderbare Aufnahmerinne ausgebildet wird, in welcher die Werkstoffstange aufgenommen wird, Anheben der Aufnahmerinne mitsamt der darin befindlichen Werkstoffstange und gleichzeitiges Verhindern des Nachrutsches der bevorrateten Werkstoffstangen, Ausrichten der Werkstoffstange in gewünschter Position zur Werkzeugmaschine.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nachfolgend anhand einiger ausgewählter Ausführungsbeispiele im Zusammenhang mit den beiliegenden Zeichnungen näher beschrieben und erläutert. Es zeigen:
- Fig. 1: eine Ausführungsform einer erfindungsgemäßen Werkstoffstangen-Zuführvorrichtung in einer schnittweisen Seitenansicht,
- Fig. 2: eine ausschnittsweise perspektivische Darstellung eines Magazins und einer Führungseinrichtung der Vorrichtung aus Fig. 1,
- Fig. 3: eine weitere ausschnittsweise perspektivische Detailansicht der Führungseinrichtung entsprechend Fig. 2,
- Fig. 4a-4g: ausschnittsweise teilweise geschnittene Seitendarstellungen des Magazins und der Führungseinrichtung entsprechend der Fig. 2 bis 3 in jeweils unterschiedlichen Positionen entsprechend einem erfindungsgemäßen Verfahrensablauf,
- Fig. 5a5d: skizzenartig verschiedene Werkzeugstangenprofile, die jeweils längs einer Mittellängslinie der Führungseinrichtung nach der Erfindung in einer beliebigen, jedoch bestimmten Stellung ausgerichtet,
- Fig. 6: eine weitere ausschnittsweise perspektivische Ansicht einer Führungseinrichtung gemäß der Erfindung mit einer Werkstoffstange, ausgerichtet zum Zuführen in eine Werkzeugmaschine und einer weiteren, noch nicht der Führungseinrichtung zugeführten Werkstoffstange,
- Fig. 7: eine weitere ausschnittsweise perspektivische Ansicht einer Führungseinrichtung mit einer zum nicht aus Übersichtlichkeitsgründen nicht weiter dargestellten Magazin hin angeordneten Separiervorrichtung, und
- Fig. 8: zeigt eine weitere ausschnittsweise perspektivische Ansicht einer Führungseinrichtung mit einem, mit den Schenkeln verbundenen Hubgerüst zum Hinausheben der Werkstoffstange aus einem Magazin in die Aufnahmerinne.

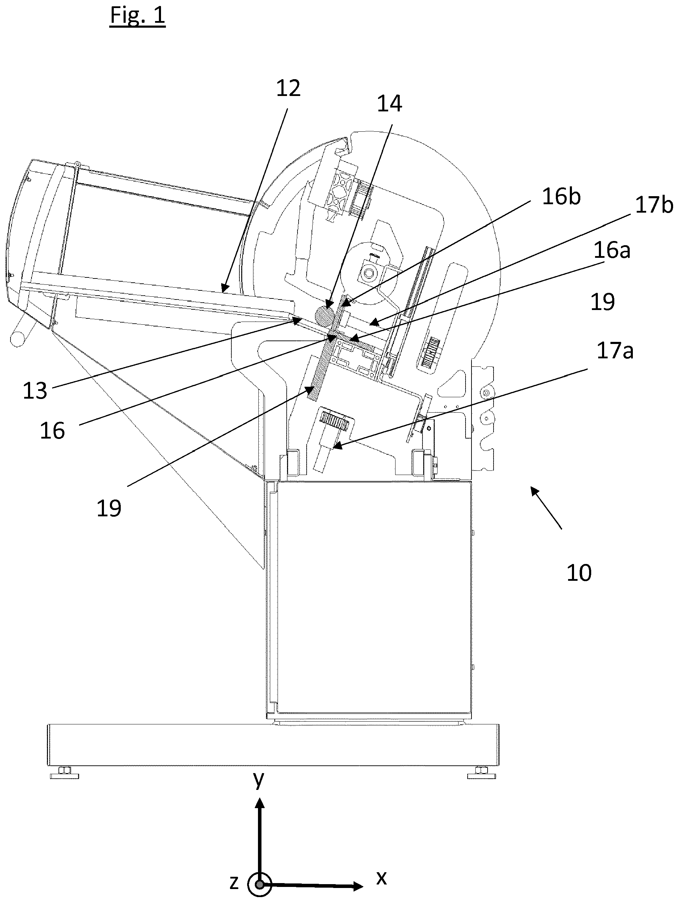

Eine Ausführungsform einer in der Fig. 1 in einer schnittweisen Seitenansicht dargestellten erfindungsgemäßen Werkstoffstangen-Zuführvorrichtung ist in ihrer Gesamtheit mit der Bezugsziffer 10 bezeichnet.

Die Werkstoffstangen-Zuführvorrichtung 10 ist zum Zuführen von Werkstoffstangen 14 zu einer aus Gründen der Übersichtlichkeit nicht weiter dargestellten Werkzeugmaschine, wie z.B. einer Drehmaschine, ausgebildet und weist ein Magazin 12 zur Bevorratung der Werkstoffstangen 14 sowie eine Führungseinrichtung 16 für diese Werkstoffstangen auf, welche einen Auflageschenkel 16a und einen Anlageschenkel 16b besitzt, welche in Zusammenhang mit den weiteren Figuren noch detaillierter beschrieben werden. Aus Gründen der Übersichtlichkeit ist bei Fig. 1 lediglich eine Werkstoffstange 14 dargestellt, die aus dem Magazin 12 in die Führungseinrichtung 16 zur nachfolgenden Bearbeitung zugeführt wird. Wie der Fig. 1 zu entnehmen, ist hierbei die Richtung der Zuführung einer Werkstoffstange aus dem Magazin in die Führungseinrichtung quer zur Längsachse der Werkstoffstange 14 in der Führungseinrichtung 16. Beispielsweise erfolgt gemäß dem bei Fig. 1 zusätzlich dargestellten Koordinatenkreuz die Zuführung im Wesentlichen in x-Richtung, während die Längsachse der Werkstoffstange 14 im Wesentlich in z-Richtung verläuft.

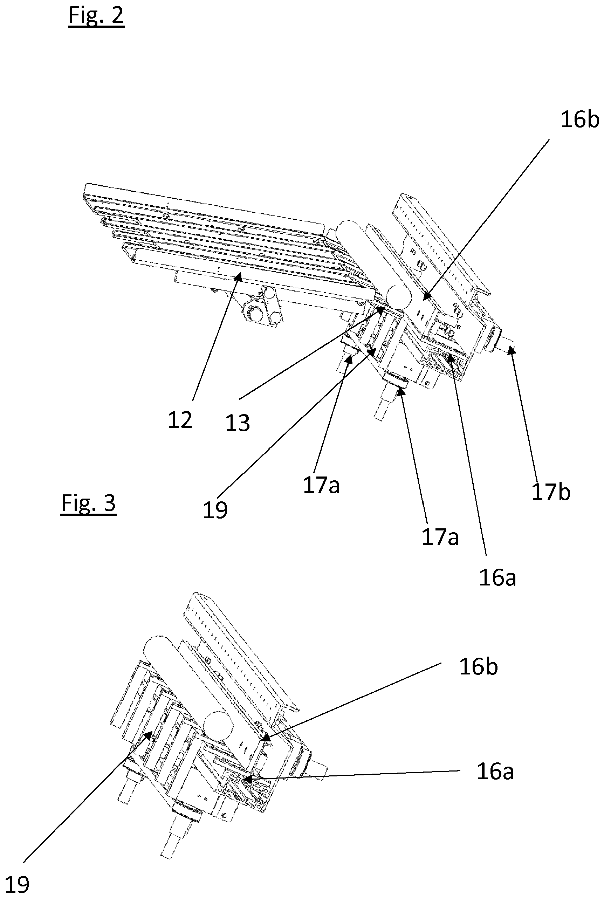

Wie ferner der im Zusammenhang mit der Ansicht der Fig. 1 aber auch mit der Ansicht nach Fig. 2 im Detail zu sehen ist, kann im Zuführbereich bzw. Übergangsbereich von dem Magazin 12 und der Führung 16 eine Art Rampe 13 angeordnet sein. Alternativ kann je nach spezieller Ausführung eine solche separate Rampe 13 auch entfallen oder es kann eine solche als Teil des Magazins 12 ausgebildet sein, so dass die Führungseinrichtung 16 in diesen Fällen am Magazin 12 anliegt.

Unter zusätzlicher Berücksichtigung der Ansicht nach Fig. 3 ist ferner zu sehen, dass sich der Anlageschenkel 16b im Querschnitt betrachtet, ausgehend vom Auflageschenkel 16a im Wesentlichen in y-Richtung erstreckt. Hierbei kann der Anlageschenkel 16b jedoch gegenüber der Vertikalen geneigt ausgerichtet sein.

Ferner weist die in den Figuren dargestellte Ausführung einer Führungseinrichtung in zweckmäßiger Ausbildung über deren Länge verteilte Anschläge 19 auf, die sich, im Querschnitt betrachtet, von dem Auflageschenkel 16a in eine in Bezug auf den Anlageschenkel 16b im Wesentlichen entgegengesetzte Richtung erstrecken, wie der eine Anlageschenkel 16b, und sich also von einer Unterseite des Auflageschenkels 16a weg erstrecken.

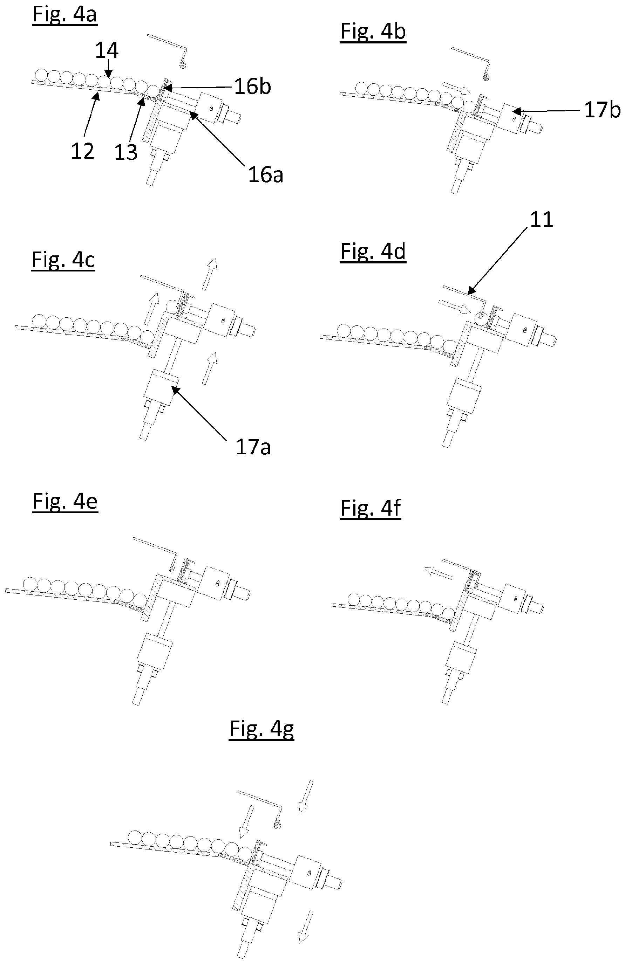

Der Auflageschenkel 16a nimmt im Querschnitt betrachtet eine in Richtung der Zuführung und gegenüber der Horizontalen geneigte Position ein und stellt für eine zu bearbeitenden Werkstoffstange 14 eine entsprechend geneigte Auflage bereit. Wie ferner nachfolgend insbesondere anhand der Fign. 4a bis 4d erläutert, stellt der geneigte Auflageschenkel 16a zweckmäßig ein in Richtung der Zuführung und gegenüber der Horizontalen verlaufendes Gefälle bereit.

Der Anlageschenkel 16b wiederum ist entlang der Neigung relativ zum Auflageschenkel 16a verfahrbar, wie bereits beim Vergleich der Ansichten nach den Fig. 2 und 3 zu entnehmen, so dass zwischen den beiden Schenkeln 16a und 16 eine variabel veränderbare Aufnahmerinne ausbildbar ist, in welche die zu bearbeitende Werkstoffstange auf die geneigte Auflage zuführbar ist. Der Auflageschenkel 16a ist schließlich zusammen mit dem Anlageschenkel 16b als Ganzes wiederum vertikal verfahrbar, wie nachfolgend noch insbesondere anhand der Fign. 4a bis 4d detaillierter beschrieben wird.

Zum Verfahren des Anlageschenkels 16b sowie des Auflageschenkels 16a, d.h. des Auflageschenkels 16a zusammen mit dem Anlageschenkel 16b, sind jeweils geeignete Antriebe 17 bzw. 17a vorgesehen und bei den Ansichten skizzenhaft eingezeichnet. Ein jeweiliger zur Verfahrbarkeit vorgesehener Antrieb 17a, 17b kann in praktischer Umsetzung z.B. als elektromechanischer Antrieb ausgebildet sein. Zweckmäßig ist jedoch auch die Ausbildung als pneumatischer Stellantrieb mit wenigstens einem einstellbaren Anschlag.

Infolge der gegenüber der Horizontalen geneigten Anordnung des Auflageschenkels 16a und der Verfahrbarkeit des Anlageschenkels 16b entlang der Neigung und relativ zum Auflageschenkel 16a nimmt die hierbei variabel veränderbare Aufnahmerinne, in welche die zu bearbeitende Werkstoffstange die Form einer geneigten L-Rinne ein (vgl. Fig. 3). Es sei darauf hingewiesen, dass das "L" aufgrund der gewählten Schnittdarstellung in gespiegelter Ausrichtung oder auch liegender Ausrichtung zu erkennen ist.

Der Anlageschenkel 16b bildet in Bezug auf die Aufnahmerinne ferner einen seitlichen Begrenzer und
der Auflageschenkel 16a somit die Auflage d.h. den Boden der Aufnahmerinne, auf welche die zu bearbeitende Werkstoffstange in der Führungseinrichtung zum Liegen kommt.

Die Auflage- und Anlageschenkel können, wie z.B. der Fig. 3 hinsichtlich des einen Auflageschenkels 16a zu entnehmen, ferner jeweils durch eine Mehrzahl von segmentartig und quer zur Zuführrichtung voneinander beabstandet angeordneten Schenkelelementen gebildet sein, oder auch, wie z.B. der Fig. 3 hinsichtlich des einen Anlageschenkels 16b zu entnehmen, als durchgehender Schenkel entlang der gesamten Aufnahmerinne ausgeführt sein.

Gemäß Fign. 2 und 3 ist in der dort vorliegenden Ausführungsform sowohl die Mehrzahl von segmentartig voneinander beabstandet angeordneten Schenkelelementen zur Ausbildung des Auflageschenkels 16a als auch der durchgehende Anlageschenkel 16b jeweils durch zwei quer zur Richtung der Zuführung voneinander beabstandeten Antrieben 17a bzw. 17b verfahrbar, auch wenn in Bezug auf die Antriebe 17b lediglich einer zu sehen ist.

Durch die individuelle Verfahrbarkeit des Auflageschenkels 16a in einem Abstand quer zur Richtung der Zuführung und/oder die individuelle Verfahrbarkeit des Anlageschenkels 16b in einem Abstand quer zur Richtung der Zuführung kann der Auflageschenkel 16a auch entlang der Führungseinrichtung unterschiedliche Positionen in vertikaler Richtung einnehmen bzw. der Anlageschenkel 16b entlang der Führungseinrichtung auch unterschiedliche Positionen im Abstand zum Magazin einnehmen..Je nach Ausführung und zuzuführender Werkstoffstangen kann es auch zweckmäßig sein, dass bei segmentartiger Bildung eines oder beider Schenkel jedem segmentartig ausgebildeten Schenkel ein eigener Antrieb zu dessen Verfahrbarkeit zugeordnet ist.

Insofern kann es ferner alternativ oder ergänzend auch zweckmäßig sein, dass insbesondere der Auflageschenkel 16a in dessen Neigung veränderbar ist, d.h. entlang der Führungseinrichtung und/oder auch gegenüber der Horizontalen in Richtung der Zuführung. Aber auch eine Einstellbarkeit der Neigung des Anlageschenkels 16b in Richtung der Zuführung und gegenüber der Vertikalen kann je nach Querschnittsform der Werkstoffstangen einstellbar ist.

Es sei jedoch darauf hingewiesen, dass es grundsätzlich je nach spezifischer Ausgestaltung oder spezifischen Einsatz auch ausreichend sein kann, wenn wenigstens ein Antrieb 17b zur relativen Verfahrbarkeit des wenigstens einen Anlageschenkels 16b und wenigstens ein Antrieb 17a zur vertikalen Verfahrbarkeit umfasst sind.

Im Zusammenhang mit den Fig. 4a bis 4d wird nachfolgend detaillierter, jedoch lediglich beispielhaft auf die Funktionsweise einer erfindungsgemäßen Werkstoffstangen-Zuführvorrichtung eingegangen.

Fig. 4a zeigt eine beispielhafte Grundstellung sowohl des Auflageschenkels 16a als auch des Anlageschenkels 16b. Eine Mehrzahl von Werkstoffstangen 14, beispielsweise mit runden Querschnitten ist im Magazin 12 bevorratet. Die in Bezug auf die Führungseinrichtung vorderste Werkstoffstange im Magazin liegt beispielsweise an dem Anlageschenkel 16b an, der noch nicht zur Bildung einer Aufnahmerinne verfahren ist. Ein derartiges Anliegen kann je nach spezieller Anordnung des Magazins zur Führungseinrichtung z.B. infolge eines durch das Magazin 12 in Richtung der Führungseinrichtung gebildetes Gefälle aufgrund der Schwerkraft erfolgen und/oder durch den ausgeübten Druck der im Magazin bevorrateten, nachfolgenden Werkstoffstangen. Der Auflageschenkel ist hierbei ferner zweckmäßig in einer Grundposition, in welcher die durch den Auflageschenkel 16a bereitgestellte, geneigte Auflage der Aufnahmerinne im Wesentlichen einen stufenlosen Übergang zum Magazin oder auch einer am Magazin ausgebildeten Rampe bereitstellt.

Um die vorderste Werkstoffstange 14 auf die Führung zu bringen, wird, wie bei Fig. 4b angedeutet, über einen oder mehrere dem Anlageschenkel 16b zugeordnete(n) Antrieb(e) der Anlageschenkel 16b soweit zurückgefahren, und also entlang der Neigung relativ zum Auflageschenkel 16a verfahren, dass die zu verarbeitende Werkstoffstange zwar sicher auf der dadurch ausgebildeten Aufnahmerinne liegt, aber die nachfolgenden Werkstoffstangen noch vor der Führungseinrichtung verharren.

In Figur 4c ist zu erkennen, das als nächster Schritt der Auflageschenkel 16a, und also zusammen mit dem Anlageschenkel 16b als Ganzes vertikal verfahren wird. Hierdurch kann die zu verarbeitende Werkstoffstange in Bezug auf die Werkzeugmaschine hinsichtlich deren Höhenposition verändert und folglich ausgerichtet werden.

Ferner ist zu erkennen das die Anschläge 19 an der Führungseinrichtung zweckmäßig sind, ein Nachrollen weiterer Werkstoffstangen zu verhindern. Es sei jedoch darauf hingewiesen, dass ein unerwünschtes Nachrollen oder anderweitiges Nachdrücken oder Nachrutschen weiterer Werkstoffstangen in die Führungseinrichtung auch durch andere Maßnahmen, z.B. durch ein im Neigungswinkel verstellbares oder in der Höhe verfahrbares Magazin erreichbar ist.

Als nächster Schritt ist in Figur 4d zu erkennen, dass die auf der Auflage liegende Werkstoffstange durch ein weiteres Verfahren des Anlageschenkels 16b seitlich in deren Position verändert wird, bis die Werkstoffstange in Bezug auf die Werkzeugmaschine exakt, bevorzugt in einer beliebig wählbaren Mittenposition, ausgerichtet ist. Anschließend kann die Werkstoffstange mit einem Vorschubmittel 11 in Richtung der Werkzeugmaschine geführt werden, so dass infolge bei Fig. 4e keine in der Aufnahmerinne liegende Werkstoffstange mehr zu sehen ist.

Ist die Werkstoffstange vollständig der Werkzeugmaschine zugeführt, kann gemäß Figur 4f zunächst der Anlageschenkel 16b und anschließend auch der Auflageschenkel 16a durch jeweilige Antriebe 17b bzw. 17a wieder in die Grundstellung gefahren werden.

Daraufhin kann erneut ein weiterer Zuführzyklus gestartet werden.

Ferner ist zu erkennen, dass die in einer solchen Grundstellung gefahrene Führungseinrichtung wiederum ein Nachrollen von Werkstoff- bzw. Materialstangen in die zu bildende Aufnahmerinne verhindert, welches somit unkontrollierbaren Bewegungsabläufen der Werkstoffstangen bei der Zuführung entgegenwirkt.

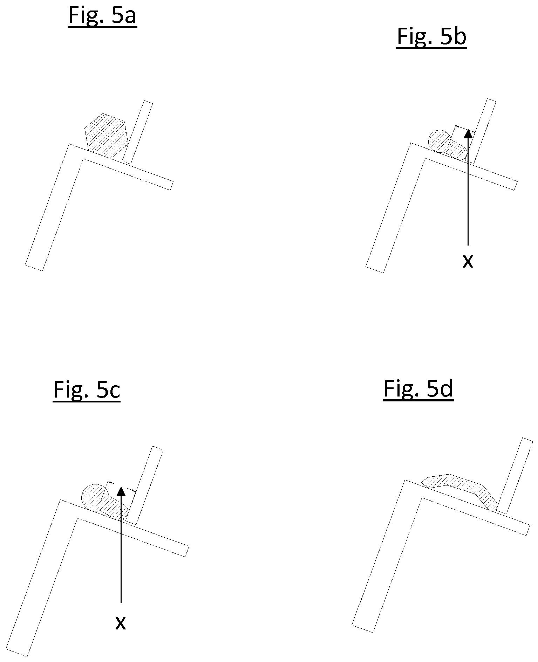

In den Fign. 5a bis 5d sind zur Veranschaulichung nochmals skizzenartig verschiedene Werkzeugstangenprofile dargestellt, die jeweils längs einer Mittellängslinie der Führungseinrichtung nach der Erfindung in einer beliebigen, jedoch bestimmten Stellung bei entsprechend ausgebildeter in Position gebrachter Aufnahmerinne individuell ausgerichtet sind.

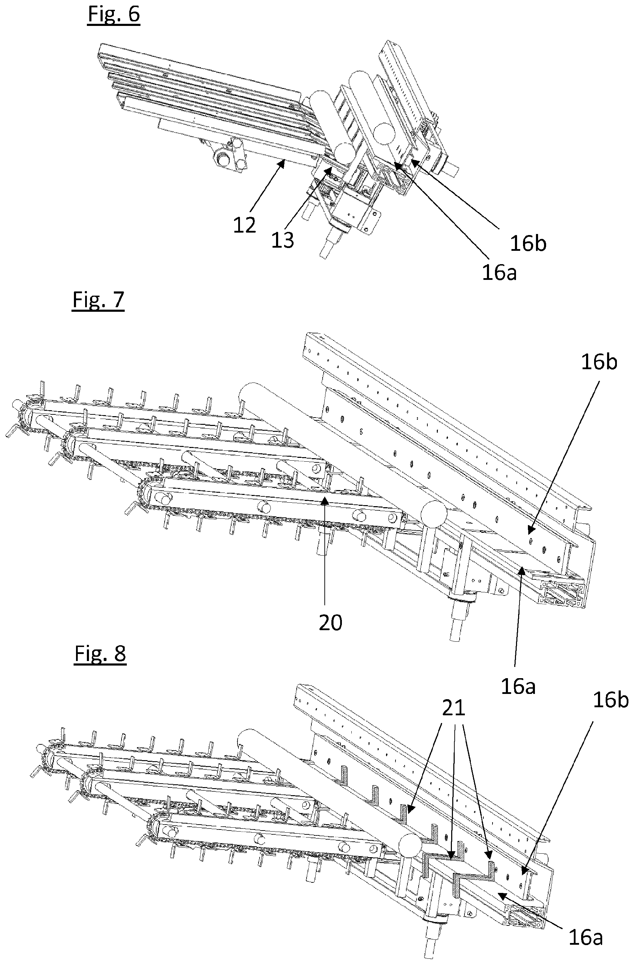

So können folglich mit der Werkstoffstangen-Zuführvorrichtung gemäß der Erfindung Werkstoffstangen auf einfache Weise und individuell exakt ausgerichtet werden, die beispielsweise anstelle eines runden Querschnitts ein Standartprofil in Sechskantausführung (Fig. 5a) oder ein Schlossprofil (Fign. 5b und 6) besitzen. Bei einem Schlossprofil oder auch einem anderen Profil mit einem außermittig liegenden Schwerpunkt bietet die erfindungsgemäße Vorrichtung aufgrund der variabel veränderbar ausbildbaren und auch in der Position veränderbaren Aufnahmerinne die Möglichkeit bietet, eine exakte Ausrichtung der Werkstoffstange in Bezug auf die Werkzeugmaschine mittig zum Umkreis des Werkstoffstangenquerschnitts (vgl. Fig. 5b), im Schwerpunkt des Profils (vgl. 5c) oder auch in jeder anderen gewünschten Position x vorzunehmen, wie in den Fign. 5b und 5c durch den mit x gekennzeichneten Doppelpfeil als Maß zwischen Anlageschenkel und gewünschtem Ausrichtpunkt angedeutet. Selbstverständlich ist auch die Zuführung und individuell flexible Ausrichtung einer Werkstoffstange mit beliebig geformten Profil möglich (vgl. Fig. 5d).

Insbesondere ist anhand der Fig. 5a bis 5d zu sehen, dass aufgrund der Neigung, insbesondere auch einstellbaren Neigung, der durch den Auflageschenkel 16a bereitgestellten Auflag und aufgrund des lediglich einen, und folglich die Auflage lediglich zu einer Seite hin begrenzenden Anlageschenkels 16b ein äußerst flexibles Zentrieren und Ausrichten ermöglicht wird, da die Werkstoffstange nicht von zwei gegenüberliegenden Wandungen, wie dies z.B. bei der EP 2 316 611 B1 durch die beiden Begrenzer der Fall ist, stets mittig in der von der Führungseinrichtung ausgebildeten Aufnahme ausrichtbar ist.

In Figur 6 ist noch einmal eine beispielhafte Position der Führungseinrichtung für die Zuführung einer Werkstoff- bzw. Materialstange zur Werkzeugmaschine perspektivisch dargestellt, in welcher eine Materialstange bereits in einer durch die Auflageschenkel 16a und Anlageschenkel 16b gebildeten Aufnahmerinne zugeführt, vorzugsweise bereits zum Zuführen in eine Werkzeugmaschine exakt ausgerichtet ist, und eine weitere, noch nicht der Führungseinrichtung zugeführten Werkstoffstange im Magazin 12 oder auf einer Rampe 13 zurückgehalten wird. Kann gemäß dem zuvor beispielhaft beschriebenen Ablauf das kontrollierte Zuführen einer zu bearbeitenden Werkstoffstange aus dem Magazin 12 in die zwischen den beiden Schenkeln 16a und 16b variabel veränderbar gebildete Aufnahmerinne allein mittels des individuellen Verfahrens des Anlageschenkels 16b und des Auflageschenkels 16a gesteuert erfolgen, kann in Abwandlung hierzu jedoch auch eine, wie bei der Ausführung nach Fig. 7 zu sehen, zum Magazin hin angeordnete Separiervorrichtung 20 vorgesehen sein. Hierdurch kann insbesondere auch die Verweilzeit zwischen zwei Zuführzyklen verkürzt werden, da zumindest der Anlageschenkel 16b nicht stets zwischen zwei Zyklen in eine zuvor beschriebene Grundstellung verfahren werden muss, um ein Nachrollen, Nachdrücken oder Nachrutschen weiterer Werkstoffstangen effektiv auszuschließen.

In Fig. 8 ist eine Ausführungsform skizziert, bei welcher ergänzend zum zur Separiervorrichtung 20 gemäß Ausführung nach Fig. 7 noch ein Hubgerüst 21 mit den Schenkeln verbunden. Ein solches oder ähnliches ist insbesondere an dem Anlageschenkel 16b fest montiert, sodass mittels der erfindungsgemäßen Verfahrbarkeit beider Schenkel die auf dem Magazin bevorrateten Werkstoffstangen kontrolliert in die Aufnahmerinne hinausgehoben werden können. Es sei darauf hingewiesen, dass je nach spezifischer Ausbildung des Magazins und/oder des Hubgerüsts 21 eine wie bei Fig. 8 skizziert Separiervorrichtung auch entfallen kann.

Es sei ferner darauf hingewiesen, dass bei den Darstellungen gemäß Fign. 6, 7 und 8 beide Schenkel, d.h. der Auflageschenkel 16a und der Anlageschenkel 16b als durchgehende Schenkel dargestellt sind Zusammenfassend ermöglicht die erfindungsgemäße Werkstoffstangen-Zuführvorrichtung folglich das Aussondern einer Werkstoffstange aus einem Magazin auf einen geneigten Auflageschenkel, insbesondere mittels Schwerkraft, bei Verfahren eines Anlageschenkels entlang der Neigung relativ zum Auflageschenkel, so dass zwischen den beiden Schenkeln eine variabel veränderbare Aufnahmerinne ausgebildet wird, in welcher die Werkstoffstange aufgenommen wird, das Anheben der Aufnahmerinne mitsamt der darin befindlichen Werkstoffstange und gleichzeitiges Verhindern des Nachrollen, Nachdrücken oder Nachrutschen der bevorrateten Werkstoffstangen, und das anschließende Ausrichten der Werkstoffstange in gewünschter Position zur Werkzeugmaschine.

Dieses Verfahren ist dahingehend vorteilhaft, dass eine Ausrichtung der Werkstoffstange insbesondere in Richtung der Zuführrichtung nicht, wie aus dem Stand der Technik entsprechend den zuvor gemachten Ausführungen bekannt, durch konstruktive Gegebenheiten vorgegeben ist, sondern entsprechend der Form und des Querschnittsprofils der Werkstoffstange durch einen einzigen und diesen entlang der Neigung relativ zum Auflageschenkel verfahrbaren Anlageschenkel sowie durch den vertikal zusammen mit dem Anlageschenkel verfahrbaren Auflageschenkel. Dabei sind besonders vorteilhaft die beiden Schenkel jeweils einzeln mittels zumindest eines Antriebs zu bewegen.

### Bezugszeichenliste

- 10: Werkstoffstangen-Zuführvorrichtung,11 Vorschubmittel
- 12: Magazin,
- 13: Rampe,
- 14: Werkstoffstangen,
- 16: Führungseinrichtung,
- 16a: Auflageschenkel der Führungseinrichtung,
- 16b: Anlageschenkel der Führungseinrichtung,
- 17a: Antriebe zum Verfahren des Auflageschenkels zusammen mit dem Anlageschenkel
- 17b: Antriebe zum Verfahren des Anlageschenkels
- 19: Anschläge
- 20: Separiervorrichtung,
- 21: Hubgerüst,
- x: Maß für gewünschten Ausrichtpunkt

## Patentansprüche

1. Werkstoffstangen-Zuführvorrichtung (10) zum Zuführen von Werkstoffstangen (14) zu einer Werkzeugmaschine, mit einem Magazin (12) zur Bevorratung der Werkstoffstangen (14) und mit einer Führungseinrichtung, in welche jeweils eine zu bearbeitende Werkstoffstange aus dem Magazin zuführbar ist, wobei die Richtung der Zuführung einer Werkstoffstange aus dem Magazin in die Führungseinrichtung quer zur Längsachse der Werkstoffstange in der Führungseinrichtung ist, wobei die Führungseinrichtung zur Bereitstellung einer variabel veränderbaren Aufnahmerinne einen Auflageschenkel (16a) und einen Anlageschenkel (16b) besitzt, wobei der Auflageschenkel (16a) eine in Richtung der Zuführung und gegenüber der Horizontalen geneigte Auflage der Aufnahmerinne bereitstellt und der Anlageschenkel (16b) entlang der Neigung relativ zum Auflageschenkel (16a) verfahrbar ist, so dass zwischen den beiden Schenkeln die variabel veränderbare Aufnahmerinne ausbildbar ist, in welche die zu bearbeitende Werkstoffstange auf die Auflage zuführbar ist, **dadurch gekennzeichnet , dass** der Auflageschenkel (16a) zusammen mit dem Anlageschenkel (16b) als Ganzes vertikal verfahrbar ist.

2. Werkstoffstangen-Zuführvorrichtung nach Anspruch 1 **dadurch gekennzeichnet, dass** der geneigte Auflageschenkel ein in Richtung der Zuführung und gegenüber der Horizontalen verlaufendes Gefälle bereitstellt.

3. Werkstoffstangen-Zuführvorrichtung nach Anspruch 1, 2 oder 3, **dadurch gekennzeichnet, dass** wenigstens ein Antrieb (17b) zur relativen Verfahrbarkeit des einen Anlageschenkels (16b) und wenigstens ein Antrieb (17a) zur vertikalen Verfahrbarkeit umfasst sind.

4. Werkstoffstangen-Zuführvorrichtung nach Anspruch 1, 2 oder 3, **dadurch gekennzeichnet, dass** der eine Auflageschenkel (16a) und/oder eine Anlageschenkel (16b) jeweils in einem Abstand quer zur Richtung der Zuführung individuell verfahrbar ist.

5. Werkstoffstangen-Zuführvorrichtung nach einem der Ansprüche 1 bis 4, **dadurch gekennzeichnet, dass** wenigstens zwei, quer zur Richtung der Zuführung voneinander beabstandete Antriebe (17b) zur relativen Verfahrbarkeit des einen Anlageschenkels (16b) und/oder wenigstens zwei, quer zur Richtung der Zuführung voneinander beabstandete Antriebe (17a) zur vertikalen Verfahrbarkeit umfasst sind.

6. Werkstoffstangen-Zuführvorrichtung nach einem der Ansprüche 1 bis 5, **dadurch gekennzeichnet, dass** der eine Auflageschenkel (16a) und/oder der eine Anlageschenkel (16b) jeweils durch eine Mehrzahl von segmentartig und quer zur Zuführrichtung voneinander beabstandet angeordneten Schenkelelementen gebildet ist.

7. Werkstoffstangen-Zuführvorrichtung nach Anspruch 6, **dadurch gekennzeichnet, dass** jedem segmentartig ausgebildeten Schenkelelement ein Antrieb zu dessen Verfahrbarkeit zugeordnet ist.

8. Werkstoffstangen-Zuführvorrichtung nach einem der Anspruch 1 bis 5, **dadurch gekennzeichnet, dass** der Auflageschenkel (16a) und/oder der Anlageschenkel (16b) als durchgehender Schenkel entlang der gesamten Aufnahmerinne ausgeführt ist.

9. Werkstoffstangen-Zuführvorrichtung nach einem der Ansprüche 1 bis 8, **dadurch gekennzeichnet, dass** zur Verfahrbarkeit wenigstens ein elektromechanischer Antriebvorgesehen ist.

10. Werkstoffstangen-Zuführvorrichtung nach einem der Ansprüche 1 bis 9, **dadurch gekennzeichnet, dass** zur Verfahrbarkeit wenigstens ein pneumatischer Stellantrieb und wenigstens ein einstellbarer Anschlag vorgesehen ist.

11. Werkstoffstangen-Zuführvorrichtung nach einem der Ansprüche 1 bis 10, **dadurch gekennzeichnet, dass** zumindest der Auflageschenkel in dessen Neigung veränderbar ist.

12. Werkstoffstangen-Zuführvorrichtung nach einem der Ansprüche 1 bis 11, **dadurch gekennzeichnet, dass** eine Neigung des Anlageschenkels in Richtung der Zuführung und gegenüber der Vertikalen einstellbar ist.

13. Werkstoffstangen-Zuführvorrichtung nach einem der Ansprüche 1 bis 12, welche ferner eine zum Magazin hin angeordnete Separiervorrichtung (20) besitzt ist, insbesondere eine, welche nach Separierung einer Werkstoffstange diese direkt der der Aufnahmerinne zuführt.

14. Werkstoffstangen-Zuführvorrichtung nach einem der Ansprüche 1 bis 13, **dadurch gekennzeichnet, dass** mit den Schenkeln ein Hubgerüst (21) verbunden ist.

## Claims

1. Material rod feeding device (10) for feeding material rods (14) to a machine tool, comprising
a magazine (12) for stocking the material rods (14), and a guide means into which material rods to be processed can be fed from the magazine, one at a time,
wherein a feeding direction of a material rod from the magazine into the guide means is transversely to the longitudinal axis of the material rod in the guide means; wherein
the guide means comprises a support leg (16a) and an abutment leg (16b) for providing a variably modifiable receiving channel, wherein the support leg (16a) provides a support surface of the receiving channel, which is inclined in the feeding direction and relative to the horizontal, and wherein the abutment leg (16b) is movable along the inclination relative to the support leg (16a), so that the variably modifiable receiving channel is formed between the two legs, into which the material rod to be processed can be fed onto the support surface, **characterized in that** the support leg (16a) together with the abutment leg (16b) is vertically movable as a whole.

2. Material rod feeding device according to claim 1, **characterized in that** the inclined support leg provides a slope in the feeding direction and relative to the horizontal.

3. Material rod feeding device according to claim 1, 2, or 3, **characterized in that** at least one drive (17b) for providing relative movability of the single abutment leg (16b) and at least one drive (17a) for providing vertical movability are comprised.

4. Material rod feeding device according to claim 1, 2, or 3, **characterized in that** the single support leg (16a) and/or the single abutment leg (16b) is individually movable at a respective distance transversely to the feeding direction.

5. Material rod feeding device according to any of claims 1 to 4, **characterized in that** at least two drives (17b) spaced apart transversely to the feeding direction for providing relative movability of the single abutment leg (16b), and/or at least two drives (17a) spaced apart transversely to the feeding direction for providing vertical movability are comprised.

6. Material rod feeding device according to any of claims 1 to 5, **characterized in that** the single support leg (16a) and/or the single abutment leg (16b) is formed by a respective plurality of segment-like leg members that are arranged spaced apart from each other transversely to the feeding direction.

7. Material rod feeding device according to claim 6, **characterized in that** each segment-like leg member has associated therewith a drive for providing movability thereof.

8. Material rod feeding device according to any of claims 1 to 5, **characterized in that** the support leg (16a) and/or the abutment leg (16b) is formed as a continuous leg along the entire receiving channel.

9. Material rod feeding device according to any of claims 1 to 8, **characterized in that** at least one electromechanical drive is provided for movability.

10. Material rod feeding device according to any of claims 1 to 9, **characterized in that** at least one pneumatic actuator and at least one adjustable stop is provided for movability.

11. Material rod feeding device according to any of claims 1 to 10, **characterized in that** at least the support leg is modifiable in its inclination.

12. Material rod feeding device according to any of claims 1 to 11, **characterized in that** an inclination of the abutment leg is adjustable in the feeding direction and relative to the vertical.

13. Material rod feeding device according to any of claims 1 to 12, further comprising a separating device (20) arranged at the side of the magazine and in particular adapted to feed a material rod, after separation thereof, directly into the receiving channel.

14. Material rod feeding device according to any of claims 1 to 13, **characterized in that** a lifting frame (21) is connected to the legs.

## Revendications

1. Dispositif d'amenée de barres de matériau (10) pour l'amenée de barres de matériau (14) à une machine-outil, avec un magasin (12) pour le stockage des barres de matériau (14) et avec un dispositif de guidage, dans lequel respectivement une barre de matériau à usiner peut être amenée à partir du magasin, où la direction de l'amenée d'une barre de matériau à partir du magasin dans le dispositif de guidage est transversale à l'axe longitudinal de la barre de matériau dans le dispositif de guidage, où le dispositif de guidage, pour fournir une rigole de logement pouvant être modifiée de façon variable, possède une branche de support (16a) et une branche d'appui (16b), où la branche de support (16a) fournit un support de la rigole de logement incliné en direction de l'amenée et par rapport à l'horizontale et la branche d'appui (16b) est mobile le long de l'inclinaison par rapport à la branche de support (16a), de sorte que la rigole de logement pouvant être modifiée de façon variable, dans laquelle la barre de matériau à usiner peut être amenée sur le support, peut être réalisée entre les deux branches, **caractérisé en ce que** la branche de support (16a) peut être déplacée verticalement en tant qu'ensemble conjointement avec la branche d'appui (16b).

2. Dispositif d'amenée de barres de matériau selon la revendication 1, **caractérisé en ce que** la branche de support inclinée fournit une pente s'étendant en direction de l'amenée et par rapport à l'horizontale.

3. Dispositif d'amenée de barres de matériau selon la revendication 1, 2 ou 3, **caractérisé en ce qu'**au moins un entraînement (17b) destiné à la mobilité relative de l'une des branches d'appui (16b) et au moins un entraînement (17a) destiné à la mobilité verticale sont compris.

4. Dispositif d'amenée de barres de matériau selon la revendication 1, 2 ou 3, **caractérisé en ce que** ladite une branche de support (16a) et/ou branche d'appui (16b) peut être déplacée individuellement respectivement à une certaine distance de manière transversale par rapport à la direction de l'amenée.

5. Dispositif d'amenée de barres de matériau selon l'une quelconque des revendications 1 à 4, **caractérisé en ce qu'**au moins deux entraînements (17b) espacés l'un de l'autre transversalement par rapport à la direction de l'amenée, destinés à la mobilité relative de ladite une branche d'appui (16b), et/ou au moins deux entraînements (17a) espacés l'un de l'autre transversalement par rapport à la direction de l'amenée, destinés à la mobilité verticale, sont compris.

6. Dispositif d'amenée de barres de matériau selon l'une quelconque des revendications précédentes 1 à 5, **caractérisé en ce que** ladite une branche de support (16a) et/ou ladite une branche d'appui (16b) sont formées respectivement par une pluralité d'éléments de branche disposés de manière espacée les uns des autres à la façon de segments et transversalement à la direction d'amenée.

7. Dispositif d'amenée de barres de matériau selon la revendication 6, **caractérisé en ce qu'**un entraînement est associé à chaque élément de branche réalisé à la façon d'un segment pour la mobilité de celui-ci.

8. Dispositif d'amenée de barres de matériau selon l'une quelconque des revendications 1 à 5, **caractérisé en ce que** la branche de support (16a) et/ou la branche d'appui (16b) est réalisée sous la forme d'une branche continue le long de toute la rigole de logement.

9. Dispositif d'amenée de barres de matériau selon l'une quelconque des revendications 1 à 8, **caractérisé en ce qu'**au moins un entraînement électromécanique est prévu pour la mobilité.

10. Dispositif d'amenée de barres de matériau selon l'une quelconque des revendications 1 à 9, **caractérisé en ce qu'**au moins un entraînement de commande pneumatique et au moins une butée réglable sont prévues pour la mobilité.

11. Dispositif d'amenée de barres de matériau selon l'une quelconque des revendications 1 à 10, **caractérisé en ce qu'**au moins la branche d'appui peut être modifiée dans son inclinaison.

12. Dispositif d'amenée de barres de matériau selon l'une quelconque des revendications 1 à 11, **caractérisé en ce qu'**une inclinaison de la branche d'appui peut être réglée en direction de l'amenée et par rapport à la verticale.

13. Dispositif d'amenée de barres de matériau selon l'une quelconque des revendications 1 à 12, lequel possède en outre un dispositif de séparation (20) disposé en direction du magasin, en particulier un, lequel, après séparation d'une barre de matériau, amène celle-ci directement à la rainure de logement.

14. Dispositif d'amenée de barres de matériau selon l'une quelconque des revendications 1 à 13, **caractérisé en ce qu'**un mât de levage (21) est relié aux branches.
